Europäisches Patentamt

European Patent Office

Office européen des brevets

(11) Publication number: **0 213 778**
**A2**

## (12) EUROPEAN PATENT APPLICATION

(21) Application number: **86306010.9**

(22) Date of filing: **04.08.86**

(51) Int. Cl.4: **G01D 5/26** , G02F 1/21 ,
G02B 6/18 , G02B 6/26 ,
G01J 9/02

(30) Priority: **05.08.85 GB 8519608**

(43) Date of publication of application:
**11.03.87 Bulletin 87/11**

(84) Designated Contracting States:
**DE FR IT NL SE**

(71) Applicant: **The General Electric Company,
p.l.c.**
**1 Stanhope Gate**
**London W1A 1EH(GB)**

(72) Inventor: **Boucouvalas, Anthony Christos**
**59 Sherwood Road**
**South Harrow Middlesex HA2 8AW(GB)**
Inventor: **Georigiou, George Antony**
**45 Oakwood Avenue**
**South Gate London N14(GB)**

(74) Representative: **Kirby, Harold Victor Albert**
**The General Electric Company, p.l.c. Central**
**Patent Department Wembley Office GEC**
**Research Centre East Lane**
**Wembley Middlesex HA9 7PP(GB)**

(54) **Interferometers.**

(57) A Mach Zehnder interferometer comprises a single optical fibre incorporating two coaxially disposed waveguides, e.g. a rod waveguide and a surrounding tube waveguide, and having a pair of axially spaced tapered regions forming couplers between the two waveguides at said regions.

EP 0 213 778 A2

*Fig.2.*

## Interferometers

This invention relates to interferometers and more particularly to Mach Zehnder interferometers utilising optical fibre waveguides. Thus in copending Patent Application No. 8512962 there is described a form of Mach Zehnder interferometer in which a pair of optical fibres are coupled together at two axially spaced regions utilising, for example, a fused biconical tapering technique. In use of such an interferometer a light signal injected along one optical fibre will be split between the fibres at one coupler region, and recombined at the second coupler region, a variation in the relative optical path lengths of the two fibres between the coupler regions producing a change in the relative light outputs of the fibres which can readily be detected.

A variation in the optical path length of one of the fibres between the two coupler regions can be achieved, for example, by subjecting the fibre to an outside influence which affects its refractive index, or physical dimensions.

An object of the invention is to provide an alternative form of optical fibre Mach Zehnder interferometer.

According, therefore, to the invention a Mach Zehnder interferometer comprises a single optical fibre incorporating two coaxially disposed waveguides and having a pair of axially spaced tapered regions forming couplers between the two waveguides at said regions.

Such an arrangemeent has the advantage that as only one fibre is involved it is relatively easy to fabricate compared with an interferometer utilising a pair of fibres. Moreover in the latter case it is desirable for the parts of the two fibres between the coupler regions to be secured against relative movement, e.g. by bonding them to each other or to a rigid support, whereas in an interferometer in accordance with the present invention the two waveguides will inherently have a fixed spacial relationship.

One waveguide of an interferometer in accordance with the invention conveniently comprises a rod waveguide, provided by the core of the fibre, the other waveguide then comprising a tube waveguide coaxially surrounding the rod waveguide and spaced radially from it by an intervening light transmitting material of lower refractive index.

The fibre may be formed, for example, of silica, with the two waveguide regions suitably doped to increase their reflective indices above that of the intervening material. However glass or other suitable waveguiding material could alternatively be employed.

Preferably the coupler regions of the fibre are located closely adjacent one another e.g. with a separation of not more than about 10mm.

Coaxial waveguide couplers suitable for use in an interferometer in accordance with the invention and a method of making such couplers are described in copending Patent Application No. 8519086.

In use of the interferometer as a sensor means may be provided for injecting light into an end of one of the waveguides and a detector for monitoring the light emerging from the other end of the waveguide, the part of the fibre between the coupler regions being subjected to a variable external influence which affects the dimensions and/or relative refractive indices of the waveguides, and produces a change in the emergent light in dependence thereon.

In some cases the part of the fibre between the two coupler regions my be coated with a conducting material, and means may then be provided for passing an electric current through the coating so as to heat said part of the fibre and produce a change in the relative refractive indices of the parts of the two waveguides between the ocupler regions.

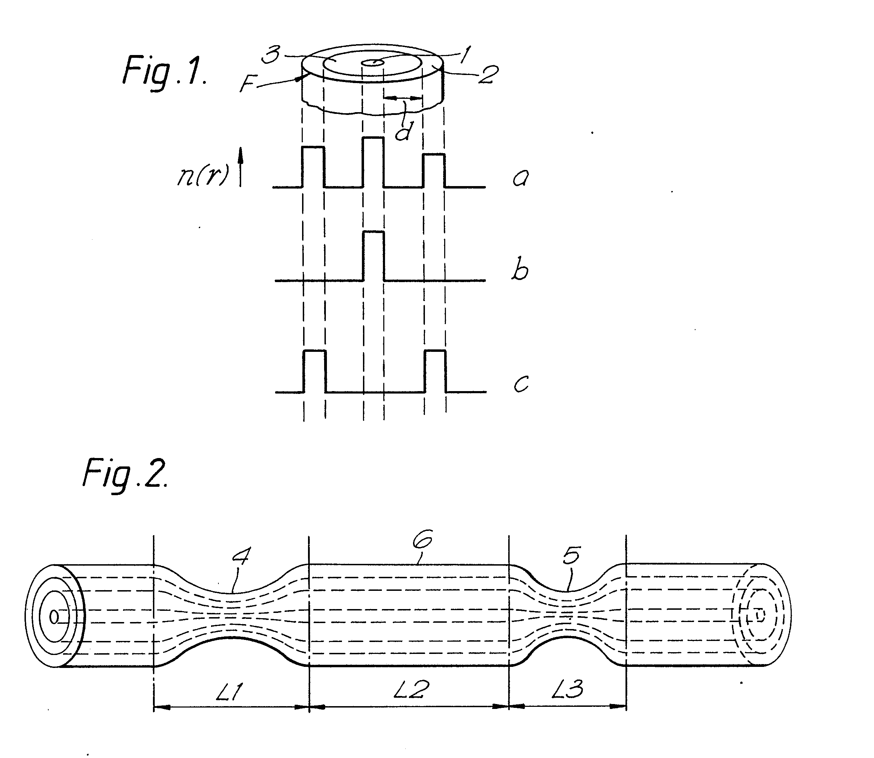

One Mach Zehnder interferometer in accordance with the invention will now be described, by way of example, with reference to Figures 1 and 2 of the accompanying drawing.

The interferometer comprises a single strand of fibre F having a central step index rod waveguide 1 and a surrounding step index tube waveguide 2 radially separated by a distance $d$ of lower refractive index material 3. The waveguides 1, 2 are both of low loss material, covneniently being formed of silica with the waveguide portions 1, 2 suitably doped, for example with germania, to increase their refractive indices above that of the intervening material 3. However glass or any other suitable waveguide material could alternatively be employed. The radial index profile is, in the ideal case, as shown in Figure 1a, this being a combination of the step index rod 1 and step index tube 2 as in Figure 1b and 1c respectively.

Tapering of such a fibre induces optical coupling between the two waveguides and thereby forms a tapered coaxial coupler. In accordance with the invention two such tapered coupler regions are formed in the fibre at 4 and 5 over lengths L1 and L3 separated by an untapered region of length L2. In use of the interferometer, light is arranged to be launched into the rod waveguide 1 forming the core of the fibre, and over the length L1 a proportion of the light will be transferred into the tube waveguide 2. The light will travel separately along the two waveguides 1, 2 in the central region 6, there being no interaction between them as this region does not form a coupler. Light guided in this region 6, although travelling the same distance, L2 in the two waveguides 1, 2, does not arrive at the next coupler region 5 in phase. This is due to the different phase velocities in the two waveguides. The light is then recombined in the next coupler region 5 - (which need not be of the same length as the first coupler region 4), and the output emerges in the rod or tube guides. By splicing an ordinary single mode fibre at the beginning and end of the combined coupler, light can be launched into the central rod waveguide 1 and the output from it readily ascertained by any convenient form of detector.

Such an interferometer could be used as an optical sensor by arranging for the central region 6 of the fibre to be subjected to a variable external influence which affects the dimensions and/or relative refractive indices of the waveguides, and which either constitutes or varies in response to a condition required to be monitored.

Other devices such as an attenuator, or tunable wavelength filter, could be produced by coating the central region 6 of the fibre with a conducting material through which a small current can be passed for heating the fibre at said region sufficient to produce a change in the relative refractive indices of the two waveguides. Thermo-optic, piezoelectric, electro-optic or other effects which influence the dimensions and/or relative refractive indices of the waveguides may alternatively be employed.

Alternatively the device could be employed as an attenuator or tunable waveguide filter.

## Claims

1. A Mach Zehnder interferometer comprises a single optical fibre incorporating two coaxially disposed waveguides and having a pair of axially spaced tapered regions forming couplers between the two waveguides at said regions.

2. A Mach Zehnder interferometer according to Claim 1 wherein one waveguide comprises a rod waveguide forming the core of the fibre, and the other waveguide comprises a tube waveguide coaxially surrounding the rod waveguide and spaced radially from it by an intervening light transmitting material of lower refractive index.

3. A Mach Zehnder interferometer according to Claim 2 wherein the optical fibre is formed of silica with the parts constituting the two waveguides doped to increase their refractive indices above that of the intervening material.

A Mach Zehnder interferometer according to Claim 3 wherein the dopant consists of germania.

5. A Mach Zehnder interferometer according to any preceding Claim wherein the coupler regions as separated by a distance of not more than 10mm.

6. A Mach Zehnder interferometer according to any one of Claims 2 to 4, incorporating means for injecting light into an end of one of the waveguides and a detector for monitoring the light emerging from the other end of the waveguide, the part of the fibre between the coupler regions being subjected to a variable external influence which affects the dimensions and/or relative refractive indices of the waveguides, and produces a change in the emergent light in dependence thereon.

7. A Mach Zehnder interferometer according to Claim 6 wherein the part of the fibre between the two coupler regions is coated with a conducting material, and means are provided for passing an electric current through the coating so as to heat said part of the fibre and produce a change in the relative refractive indices of the parts of the two waveguides between the coupler regions.

8. A Mach Zehnder interferometer substantially as shown in and as hereinbefore described with reference to Figures 1 and 2 of the accompanying drawing.

Fig.1.

Fig.2.